# EUROPÄISCHE PATENTSCHRIFT

(11) **EP 1 742 756 B1**
(45) Veröffentlichungstag und Bekanntmachung des Hinweises auf die Patenterteilung: **20.08.2008**
(21) Anmeldenummer: 05732395.8
(22) Anmeldetag: 22.04.2005
(51) Int. Cl.: B23K 1/00, B01J 35/04, F01N 3/28

(54) **APPLIKATION VON GLEITMITTEL ZUR HERSTELLUNG EINER HOCHTEMPERATURFESTEN STRUKTUR**
APPLICATION OF LUBRICANT FOR PRODUCING A STRUCTURE THAT IS RESISTANT TO HIGH TEMPERATURES
APPLICATION DE LUBRIFIANT POUR REALISER UNE STRUCTURE QUI RESISTE AUX TEMPERATURES ELEVEES

(30) Priorität: 29.04.2004 DE 102004021038
(43) Veröffentlichungstag der Anmeldung: 17.01.2007
(73) Patentinhaber: Emitec Gesellschaft für Emissionstechnologie mbH, 53797 Lohmar (DE)
(72) Erfinder: ALTHÖFER, Kait, 51674 Wiehl (DE)
(74) Vertreter: Rössler, Matthias
(86) Internationale Anmeldenummer: PCT/EP2005/004337
(87) Internationale Veröffentlichungsnummer: WO 2005/107989

(56) Entgegenhaltungen:
- WO-A-93/25339
- WO-A-02/090734

## Beschreibung

Die vorliegende Erfindung betrifft ein Verfahren zur Herstellung einer hochtemperaturfesten Struktur, welche mindestens eine wenigstens teilweise strukturierte metallische Lage umfasst. Derartige hochtemperaturfeste Strukturen werden insbesondere als Trägerkörper für Katalysatoren, als Adsorber, als Partikelfilter oder in ähnlicher Weise im Automobilbau eingesetzt.

Solche hochtemperaturfesten Strukturen werden vielfach auch als Wabenkörper bezeichnet. Sie umfassen üblicherweise zumindest eine glatte und eine gewellte metallische Lage, die so zueinander positioniert werden, dass sie Strömungskanäle für das hindurch zu leitende Abgas bilden. Die Oberflächen dieser Lagen beziehungsweise dieser Kanäle werden dann mit mindestens einer vorgegebenen Beschichtung versehen, die schädliche Bestandteile des Abgases in weniger schädliche Komponenten konvertiert. Das Profil bzw. die Wellung der mindestens einen Lage realisiert dabei eine relativ große Oberfläche pro Volumen der Struktur, so dass ein inniger Kontakt des Abgases mit der (un-) beschichteten Oberfläche ermöglicht wird. Die Konvertierung findet in der Regel bei relativ hohen Temperaturen statt. Das hier durch die Temperatur hindurch strömende Abgas erreicht z.B. Temperaturen bis zu 1.000°C. Neben der hohen thermischen Beanspruchung ist diese Struktur wahren des Betriebes im Abgassystem einer mobilen Verbrennungskraftmaschine auch hohen dynamischen Belastungen ausgesetzt, die ihren Ursprung beispielsweise aus den von der Verbrennung resultierenden Druckimpulsen des Abgases selbst oder externen Anregungen während des Fahrbetriebs haben.

Aus metallischen Lagen gewickelten oder geschichtete und verbundene Wabenkörper sind in vielfältigen Formen bekannt. Man unterscheidet vor allem zwei typische Bauformen für solche Wabenkörper. Eine frühere Bauform, für die die DE 29 02 779 typische Beispiele zeigt, ist die spiralige Bauform, bei der im wesentlichen nur eine glatte und nur eine gewellte Blechlage aufeinandergelegt und spiralförmig aufgewickelt werden. Bei einer anderen Bauform wird der Wabenkörper aus eine Mehrzahl von abwechselnd angeordneten glatten und gewellten oder unterschiedlich gewellten Blechlagen aufgebaut, wobei diese Blechlagen zu einem oder mehreren Stapeln geschichtet werden, die miteinander verschlungen bzw. gewunden werden. Im Gegensatz zur Spiralform kommen bei dieser Bauform alle Enden der Blechlagen außen an einem Gehäuse beziehungsweise Mantelrohr zum Anliegen und können dort dauerhaft fixiert werden. Typische Beispiele dieser letztgenannten Bauform sind in der EP 0 245 737 oder der WO 90/03220 beschrieben, die beispielsweise auch als sogenannte S-Form bekannt geworden sind. Zur genaueren Beschreibung der Art bzw. Gestalt der unterschiedlichen Strukturen bzw. Wabenkörper kann zur Erläuterung auf den Offenbarungsgehalt dieser Veröffentlichungen zurückgegriffen werden.

Um einen Wabenkörper bzw. eine solche hochtemperaturfeste Struktur herzustellen, müssen zumindest ein Teil der Lagen miteinander verbunden werden. Hierzu sind verschiedene Fügetechniken bekannt. Aufgrund der hohen thermischen und dynamischen Belastungen der Struktur während des bevorzugten Einsatzes in Abgassystemen mobiler Verbrennungskraftmaschinen haben sich insbesondere verschiedene Hartlöt-Verfahren zur Generierung dauerhafter Verbindungen hervorgetan. Hierzu ist es erforderlich, ein Lotmaterial, welches üblicherweise einen niedrigeren Schmelzpunkt als die metallischen Lagen aufweist, in den Wabenkörper einzubringen und an den gewünschten Verbindungsabschnitten zu positionieren. Durch das Erhitzen des Wabenkörpers über den Schmelzpunkt des Lotmaterials schmilzt schließlich dieses auf und verbindet beim Abkühlen die angrenzenden metallischen Lagen miteinander.

Das Lotmaterial kann in unterschiedlichen Formen in den Wabenkörper eingebracht werden, beispielsweise als Lotfolie und/oder Lotpulver. Lotfolie wird in den Bereichen, in denen Lagen miteinander verbunden werden sollen, eingelegt und/oder eingeklebt. Das Lotpulver wird mit einem Haftmittel (Öl, Leim, Kleber, etc.) ebenfalls auf der Oberfläche der Lagen festgehalten, bis der tatsächliche Lötprozess stattfindet.

Als Haftmittel werden bevorzugt speziell hierfür entwickelte Kleber eingesetzt, der an den gewünschten Verbindungsabschnitten vorgesehen wird. Hierfür sind eine Mehrzahl verschiedener Techniken bekannt. Beispielsweise offenbart die EP 0 422 000 den Auftrag des Haftmittels mit rotierenden Walzen. Der Auftrag des Haftmittels erfolgt hier vor dem Wickeln beziehungsweise Stapeln der Lagen. Weiterhin ist beispielsweise aus der DE 101 51 487 bekannt, dass Haftmittel in flüssiger Form unter Ausnutzung von Kapillarkräften in das Innere einer solchen Wabenstruktur einzubringen. Dies kann durch einfaches, stirnseitiges Eintauchen der Wabenstruktur in das Haftmittel erfolgen. Für eine detailliertere Beschreibung der Methode zum Auftragen von Haftmittel kann auf die Erläuterungen der genannten Veröffentlichungen zurückgegriffen werden.

Zur Ausbildung eines Profils bzw. einer Wellung in der metallischen Lage sind vielfach Betriebsmittel erforderlich, die die Formgebung unterstützen. So werden beispielsweise gewellte Blechlagen häufig unter Einsatz eines formgebenden Walzverfahrens erzeugt. Außerdem ist zu berücksichtigen, dass die Lagen vielfach über einen längeren Zeitraum gelagert und/oder transportiert werden, wobei diese zu ihrem Schutz ebenfalls mit Betriebsmitteln benetzt sind. Als ein solches Betriebsmittel wird überwiegend Öl eingesetzt, welches sogar dauerhaft auf der Oberfläche der Lagen haften kann. Das auf der Oberfläche solcher Lagen befindliche Öl beeinflusst jedoch unter Umständen den Lötprozess negativ. So ist es beispielsweise möglich, dass dieses Öl selbst bzw. eine sich aus der Alterung des Öls bildende Substanz Hafteigenschaften aufweist, die ein zumindest zeitweises Festhalten von Lotmaterial bei einem Belotungsvorgang zur Folge hat. Dies führt unter Umständen dazu, dass fügetechnische Verbindungen an Stellen ausgebildet werden, die zum Ausgleich von thermischen Differenzdehnungen vorgesehen sind und somit die dauerhafte strukturelle Integrität des Bauteils gefährden. Es ist auch möglich, dass die Betriebsmittel bzw. Öle flüchtige Komponenten aufweisen, die gerade ein für den Lötprozess angelegtes Vakuum bzw. eine vorgegebene, definierte Atmosphäre beeinträchtigen.

Aus diesen Überlegungen ist es bislang üblich gewesen, entweder diese Betriebsmittel als Haftmittel einzusetzen oder sie vollständig zu entfernen und ein separates Haftmittel vorzusehen, das dann praktisch auf eine gereinigte bzw. eine betriebsmittelfreie Oberfläche aufgetragen wird (Siehe die WO-A-93 25339) .

Hiervon ausgehend ist es nun Aufgabe der vorliegenden Erfindung, ein verbessertes Verfahren zur Herstellung einer hochtemperaturfesten Struktur aus mindestens einer wenigstens teilweise strukturierten metallischen Lage anzugeben. Insbeson dere soll das Verfahren eine möglichst präzise und genau vorgebbare Generierung von fügetechnischen Verbindungen in der Struktur zur Folge haben. Gleichzeitig soll bevorzugt das Hantieren beziehungsweise das Formen der metallischen Struktur erleichtert und prozesssicher gestaltet werden, so dass sich die hierfür erforderlichen Vorgänge mit hoher Präzision auch im Rahmen einer Serienfertigung verwirklichen lassen. Zusätzlich ist auch ein Verfahren anzugeben, welches einen sparsamen Einsatz von Lotmaterial und/oder Betriebsmitteln zur Folge hat.

Diese Aufgaben werden gelöst durch ein Verfahren mit den Merkmalen beziehungsweise Schritten des unabhängig formulierten Patentanspruchs. Weitere vorteilhafte Ausgestaltungen des Verfahrens sind Gegenstand der abhängig formulierten Patentansprüche.

Das erfindungsgemäße Verfahren zur Herstellung einer hochtemperaturfesten Struktur, die mindestens eine wenigstens teilweise strukturierte metallische Lage umfasst, weist zumindest die folgenden Schritte auf
(a) Umformen einer glatten metallischen Lage infolge eines Walzverfahrens, wobei Öl zumindest teilweise die mindestens eine Lage benetzt;
(b) zumindest teilweises Entfernen des Öls;
(c) Zuführen von Gleitmitteln auf mindestens einen Teilabschnitt der mindestens einen Lage;
(d) zumindest teilweises Formen der Struktur;
(e) Erzeugen von fugetechnischen Verbindungen zur Fixierung der Struktur.

Mit dem Begriff "Öl" sind Betriebsmittel gemeint, die zur Lagerung, dem Transport und/oder der Umformung der mindestens einen Lage zuvor eingesetzt wurden. Die umfasst insbesondere Mineralöle, synthetische Öle, Fette, etc.. Dem erfindungsgemäßen Verfahren liegt dabei als ein wesentlicher Aspekt die Maßnahme zugrunde, dass zunächst das Öl entfernt wird und anschließend ein Gleitmittel, das ebenfalls ein Öl umfassen kann, wieder aufgetragen wird. Damit soll erreicht werden, dass die zuvor undefinierten Zustände beziehungsweise die zuvor nicht verifizierbaren Bereiche, die mit Öl benetzt sind, beseitigt werden und in eindeutig definierte Bereiche umgewandelt beziehungsweise neu geschaffen werden. So werden exakt vorgegebene Teilabschnitte gebildet, in denen das Gleitmittel u.a. sicherstellt, dass die aneinander anliegenden Lagen beziehungsweise Lagenabschnitte während des Formens der Struktur zerstörungsfrei aufeinander abgleiten. Dies gilt insbesondere für ein Wickeln beziehungsweise Winden von Stapeln umfassend eine Mehrzahl solcher metallischen Lagen.

Aufgrund des vorherigen Entfernens von unbenötigtem Öl wird der Anteil der flüchtigen Komponenten während des abschließenden Lötprozesses deutlich reduziert. Durch das vorgeschlagene Verfahren wird tatsächlich nur in den gewünschten Bereichen das Aufeinandergleiten von metallischen Lagen durch Vorsehen eines Gleitmittels unterstützt, während in den übrigen Teilbereichen eine blanke oder eine anderweitig beschichtete Oberfläche vorliegt. Auf diese Weise ist es beispielsweise möglich, jedem Kontaktbereich der benachbart zueinander angeordneten, metallischen Lagen einen separaten Teilabschnitt mit Gleitmittel zur Verfügung zu stellen.

Bezogen auf Schritt (a) sei darauf hingewiesen, dass eine metallische Lage sowohl Blechfolien als auch andere metallische Lagern umfasst, insbesondere Gitterstrukturen, Lochplatten, Faservliese, Verbundmaterialien, etc..

Mit einem Walzverfahren sind insbesondere die Verfahren gemeint, mit denen durch eine äußere Krafteinwirkung mittels einem Werkzeug (beispielsweise rotierender Profilwalzen) ein Profil bzw. eine Wellung in das glatte Material eingebracht wird. Die Umformung erfolgt überwiegend derart, dass eine dauerhafte, plastische Verformung vorgenommen wird. Dabei wird insbesondere die Dicke der umgeformten Lagen bzw. Materialien nach Möglichkeit aufrechterhalten. Diese daraus resultierende Wellung ist üblicherweise so gestaltet, dass sie sich in bestimmten Intervallen wiederholt, beispielsweise eine Art Sinus-Wellung, eine Omega-Wellung, ein Sägezahn-Profil, etc.. Zum Umformen der glatten metallischen Lage wird diese vorteilhafterweise kontinuierlich einem Walzwerkzeug zugeführt. Solche Umformungsschritte lassen sich gleichfalls mit dem Fertigungsverfahren Stanzen, Drücken, etc. durchführen, die hier mit erfasst sind, insbesondere, wenn gleichzeitig zur Umformung auch eine Materialtrennung erfolgt.

Das hierzu benötigte beziehungsweise bereits auf der glatten metallischen Lage befindliche Öl (oder ähnliche Betriebsmittel) wird nach dem Umformschritt zumindest teilweise entfernt. Bevorzugt wird das gesamte Öl auf der Oberfläche entfernt, es ist jedoch auch möglich, das Öl nur in bestimmten Teilbereichen zu entfernen, beispielsweise denen, in denen anschließend eine zusätzliche Beschichtung aufgetragen werden soll. Das noch auf der Oberfläche befindliche Öl kann gegebenenfalls (z.B. chemisch und/oder thermisch) vorbehandelt und schließlich mit dem Gleitmittel zumindest teilweise überdeckt werden.

Grundsätzlich ist es unerheblich, ob die einzelnen Verfahrensschritte sequentiell hintereinander ausgeführt werden, oder ob unter Umständen einzelne Verfahrensschritte wiederholt werden. So ist es beispielsweise möglich, dass abwechselnd der Verfahrensschritt (c) und (d) ausgeführt wird. Dies kann zum Beispiel derart erfolgen, dass abwechselnd glatte und strukturierte Lagen aufeinander gestapelt werden, wobei nach jeder Lage an bestimmten Teilabschnitten einer Schicht Gleitmittel appliziert wird. Somit wird das Schichten bzw. Stapeln der Lagen, welches als teilweises Formen der Struktur auszulegen ist, und das Zuführen von Gleitmitteln abwechselnd durchgeführt, bis der gewünschte Stapel gebildet ist Der so hergestellte Stapel kann anschließend in ein Gehäuse eingeführt, belotet und thermisch behandelt werden.

Für den Fall, dass eine solche hochtemperaturfeste Struktur nicht mit einem Lötverfahren hergestellt wird, kann eine fügetechnische Verbindung zur Fixierung der Struktur auch durch die Realisierung von Diffusionsverbindungen vorgenommen werden. In diesem Fall weist das Gleitmittel bevorzugt einen hohen Kohlenstoffanteil auf, welcher als Katalysator für derartige Diffusionsverbindungen dient Bei dieser speziellen Art der Ausbildung fügetechnischer Verbindungen überlappen die Verbindungsbereiche und die Teilabschnitte. Bei dem hier bevorzugten Verbinden durch Lotmaterial ist dies regelmäßig nicht der Fall.

Gemäß einer Weiterbildung des Verfahrens wird nach Schritt (b) der mindestens einen Lage ein Haftmittel zur Erzeugung mindestens einer Haftschicht zugeführt. Das Haftmittel hat die Funktion, nachträglich zugeführtes Material zumindest zeitweise zu fixieren. Damit ist insbesondere ein Lotmaterial gemeint, welches in der Nähe der Kontaktbereiche der Lagen positioniert wird, bevor die fügetechnische Verbindung erzeugt wird. Als Haftmittel wird bevorzugt ein Kleber eingesetzt, der einen hohen Lösemittelanteil aufweist, z. B. einen Azethon-Lösungsmittelanteil größer 98% oder einem vergleichbaren Lösungsmittelanteil Ethanol. Das Lösemittel ist bevorzugt leicht verflüchtigend. Das Haftmittel weist eine sehr geringe Korrosionsneigung auf, d.h., das die metallischen Lagen bei dauerhaftem Kontakt mit dem Haftmittel keiner Korrosion unterliegen. Zudem ist vorteilhaft, wenn das Haftmittel bis 300°C temperaturbeständig ist, d.h. seine Hafteigenschaft nicht verliert. Somit sind gegebenenfalls erforderliche thermische Vorbehandlungen bis zu diesem Temperaturbereich möglich. In speziellen Fällen, beispielsweise wenn das Haftmittel aufgedruckt wird, weist dieses eine elektrische Leitfähigkeit im Bereich von 1,0 bis 1,2 mS (milli Siemens) auf. Die Viskosität eines solchen Haftmittels sollte in etwa im Bereich von 3,5 bis 4,5 mPa (milli Pascal) liegen, wobei diese Werte für Raumtemperatur und normalen Atmosphärendruck gelten. Die daraus hergestellten Haftmittelschichten haben bevorzugt eine Breite von 0,1 bis 1,0 mm (Millimeter) und sind insbesondere streifenförmig ausgebildet. Sie weisen eine Schichtdicke auf, die vorteilhafterweise in einem Bereich von 0,1 µm bis 0,5 µm (Mikrometer) beträgt.

In diesem Zusammenhang wird weiter vorgeschlagen, dass die mindestens eine Haftschicht in einem Verbindungsbereich vorgesehen ist, der benachbart zu dem mindestens einen Teilabschnitt ausgebildet ist Mit dem Verbindungsbereich ist insbesondere der Bereich gemeint, an dem bei der zu belotenden Struktur ein Kontakt mit Lotmaterial möglich und auch erwünscht ist. Der Verbindungsbereich bezeichnet somit auch den Bereich, in dem letztendlich Lotmaterial oder anderes Beschichtungsmaterial fixiert werden soll. Grundsätzlich ist auch möglich, dass sich der Verbindungsbereich mit der Haftschicht und der Teilabschnitt mit dem Gleitmittel (z.B. benachbarter Lagen) teilweise überlagern, bevorzugt ist jedoch die Ausbildung separater Bereiche auf der jeweiligen metallischen Lage. Somit ist gewährleistet, dass sich die gewünschten Eigenschaften von Gleitmittel und Haftschicht nicht gegenseitig negativ beeinträchtigen, sondern dauerhaft während des Herstellungsprozesses aufrechterhalten werden können.

Die Verbindungsbereiche können zumindest bereichsweise zueinander versetzt angeordnet sein. Damit ist insbesondere gemeint, dass die Verbindungsbereiche benachbart zueinander angeordneter Lagen des Wabenkörpers zum Beispiel nicht in radialer und/oder axialer Richtung hintereinander angeordnet sind. Es ist weiterhin möglich, dass die Verbindungsbereiche in einem Querschnitt des Wabenkörpers nach Art eines Schachbretts angeordnet sind, wobei in Richtung des Verlaufs der Lage und/oder senkrecht dazu Kontaktstellen der aneinanderliegenden Lagen, insbesondere wiederholt, keine Verbindungsbereiche vorgesehen sind. Ganz besonders bevorzugt ist es, dass ein solches Verbindungs-Muster über die Länge des Wabenkörpers nicht gleich ist, sondern mindestens zwei voneinander beabstandete Querschnitte vorliegen, die voneinander verschiedene Verbindungs-Muster aufweisen.

Außerdem wird weiter vorgeschlagen, dass das Gleitmittel mit einem Drop-on-Demand-Verfahren oder einem Bubble-Jet-Verfahren appliziert wird.

Das "Drop-on-Demand"-Verfahren ist ein Druckverfahren, das sich dadurch auszeichnet, dass das Gleitmittel tropfenförmig auf den dafür vorgesehenen Teilabschnitt appliziert wird. Die Generierung des Tropfens erfolgt tatsächlich nur zu den Zeitpunkten, wenn die metallische Lage gerade damit benetzt werden soll, im Gegenteil zum sogenannten Continuous-Inkjet-Verfahren, bei dem die Tropfen kontinuierlich produziert aber teilweise nur appliziert werden. Das "Drop-on-Demand"-Verfahren stellt somit quasi ein diskontinuierliches Bereitstellungsverfahren für Gleitmitteltropfen dar. Das heißt mit anderen Worten, dass das Applizieren des Gleitmittels derart erfolgt, das eine Relativbewegung zwischen der Lage und der Vorrichtung zur Durchführung des Drop-on-Demand-Verfahrens realisiert wird, wobei die Vorrichtung nur genau dann Tropfen generiert und emittiert, wenn sie sich auf dem gewünschten Teilabschnitt auftragen lassen.

Bei Drop-on-Demand-Systemen ist es beispielsweise möglich, einzelne Tropfen mittels piezoelektrischer Aktoren zu erzeugen. Bei piezoelektrischen Aktoren handelt es sich üblicherweise um elektromechanische Wandler, die auf dem piezoelektrischen Effekt beruhen. Hierbei führt das Anlegen einer Wechselspannung an das piezoelektrische Element zu mechanischen Schwingungen. Diese Schwingung wird auf ein vorgegebenes Volumen des Gleitmittels übertragen, wobei sich an einem Auslass der Vorrichtung jeweils ein Tropfen bildet, der anschließend mit einer relativ hohen Geschwindigkeit einer Düse zugeführt wird. Es sind mehrere Drop-on-Demaad-Verfahren bekannt, die piezoelektrische Wandler umfassen, beispielsweise Piezo-Röhrchen, -Scheiben, -Lamellen.

Ein besonders bevorzugtes Drop-on-Demand-Verfahren stellt das sogenannte "Bubble-Jet"-Verfahren dar. Hierbei werden die Gleitmittel-Tropfen nicht mittels eines piezoelektrischen Wandlers erzeugt, sondern durch Einsatz von thermischen Aktoren. Diese sind in der Regel Heizelemente, die in einer Düse ausgebildet und mit dem Gleitmittel verbunden sind. Durch diese Heizelemente wird kurzzeitig in der Düse ein lokal begrenzter Bereich auf eine sehr hohe Temperatur gebracht, die deutlich über der Siedetemperatur des Gleitmittels liegt. Das Gleitmittel beginnt dann lokal zu sieden, wodurch sich nach sehr kurzer Zeit eine geschlossene Dampfblase bildet Diese Dampfblase treibt einen Tropfen des Gleitmittels aus der Düse, wobei Drücke von 10 bar oder mehr und Ausdrucksgeschwindigkeiten von 10 m/s (Meter pro Sekunde) und mehr erreicht werden können. Diese Dampfblase kollabiert anschließend, worauf es aufgrund von Kapillarkräften zum Nachsaugen von Gleitmittel in der Düse kommt Bei solchen Bubble-Jet-Verfahren werden verschiedene Drucktechniken unterschieden, die u.a. als "Edge-" und "Sides-Hooter" bekannt sind.

In diesem Zusammenhang ist es besonders vorteilhaft, wenn das Gleitmittel und zusätzlich auch das Haftmittel mit einer gemeinsamen Vorrichtung appliziert wird. Grundsätzlich ist es so möglich, dass das Gleitmittel und das Haftmittel mit unterschiedlichen Drucktechniken appliziert werden, beispielsweise das Gleitmittel mit einem Drop-on-Demand-Verfahren und das Haftmittel mit einem Continuous-Inkjet-Verfahren. Bevorzugt ist jedoch das Bereitstellen von Gleitmittel und Haftmittel nach einem Verfahren, insbesondere einem bestimmten Drop-on-Demand-Verfahren. Damit ist insbesondere gemeint, dass die Vorrichtung zu bestimmten Zeitpunkten gleichzeitig sowohl Haftmittel als auch Gleitmittel emittiert, es ist jedoch auch möglich, dass die verschiedenen Medien nacheinander mit der gemeinsamen Vorrichtung aufgetragen werden.

Gemäß einer Weiterbildung des Verfahrens wird der mindestens einen Lage vor Schritt (a) schnell-verflüchtigendes Öl appliziert, welches nach der Umformung und insbesondere bis zur Durchführung des Schrittes (c) beziehungsweise des Applizierens des Haftmittels im wesentlichen verflüchtigt ist. D.h. mit anderen Worten, dass für das Umformen erforderliche Öl unmittelbar vor dem Umformen auf die Oberfläche der Lage aufgegebene wird, sich dieses aber bereits nach sehr kurzer Zeit nach dem Umformprozess verflüchtigt, also in gasförmige Bestandteile umwandelt Mit einem sehr kurzen Zeitraum ist insbesondere ein Zeitraum gemeint, der in einem Bereich kleiner 10 Sekunden liegt, insbesondere auch kleiner 5 Sekunden. Das Verflüchtigen kann ohne zusätzliche Maßnahmen gewährleistet werden, in dem die kontinuierlich bewegte Lage für diesen Zeitraum nicht weiter bearbeitet wird, so dass derweil die Verflüchtigung an die Umgebung ungehindert stattfinden kann. Es ist aber auch möglich, die Auflösung des Öls zu begünstigen, beispielsweise durch die Bereitstellung erhöhter Temperaturen, chemischer Substanzen, mechanischer Abtragungsvorrichtungen, etc..

Weiter wird auch vorgeschlagen, dass der Schritt (b) wenigstens eines der Verfahren thermisches oder mechanisches Entfetten umfasst. Mit thermischem Entfetten ist insbesondere gemeint, dass eine (deutlich) über Raumtemperatur liegende Temperatur im Umfeld der Lage bereitgestellt wird, bei der sich zumindest ein erheblicher Anteil des auf der Oberfläche befindlichen Öles verflüchtigt Dabei sind bevorzugt Temperaturen in einem Bereich von 200°C bis 400°C gemeint, insbesondere in einem Bereich von 250°C bis 300°C. Unter mechanischem Entfetten wird der Einsatz von angetriebenen und/oder nicht angetriebenen Reinigungsmitteln verstanden, die in physischen Kontakt mit der Oberfläche der Lage gebracht werden. Durch den Kontakt wird das Aufnehmen (im Reinigungsmittel) beziehungsweise das Abtragen von Öl (von der Lage) sichergestellt.

Wie bereits mehrfach zuvor angedeutet, ist es besonders vorteilhaft, wenn die mindestens eine Lage zumindest vor oder nach Schritt (d) mit einem Lotmaterial in Kontakt gebracht wird. Unter Umständen ist es auch möglich, dass auch ein mehrmaliges Applizieren von Lotmaterial stattfindet. Das Lotmaterial wird bevorzugt (unkontrolliert) mit den Oberflächen der die Struktur bildenden Lagen in Kontakt gebracht, wobei sich insbesondere nur dort Lotmaterial dauerhaft anlagert, wo ein Haftmittel vorgesehen ist. Das restliche Lotmaterial wird aufgefangen und einem nächsten Belotungsprozess wieder zugeführt. Als Lotmaterial wird bevorzugt ein Lotpulver eingesetzt, welches eine gemittelte Lotkornfraktion auf weist, insbesondere mit einer Lotkorngröße kleiner 106 µm (Mikrometer). Das Lotmaterial weist bevorzugt eine Nickel-Basislegierung auf.

Gemäß einer Weiterbildung des Verfahrens umfasst Schritt (e) eine thermische Behandlung der Struktur. Damit ist bevorzugt ein Hochtemperatur-Vakuum-Lötprozess gemeint. Dabei werden bevorzugt nur Temperaturen erreicht, die unterhalb der Schmelztemperatur des Materials der metallischen Lage liegen.

Außerdem wird auch vorgeschlagen, dass die Struktur aus einer Mehrzahl glatter Folien und gewellter Folien hergestellt wird, wobei Schritt (d) das abwechselnde Stapeln dieser Folien umfasst, so dass Kontaktstellen gebildet werden, welche zumindest teilweise von mindestens einem Abschnitt mit dem Gleitmittel überlagert sind, und die Folien dann zumindest teilweise zueinander bewegt werden. Beim abwechselnden Stapeln von glatten und gewellten Folien werden in der Regel nahezu linienförmige Kontaktstellen der benachbart zueinander angeordneten Folien generiert, die sich in etwa entlang der Extrema der Wellung ausbilden. Nun wird hier vorgeschlagen, dass der Teilabschnitt mit dem Gleitmittel genau diese Kontaktstellen überlagert. Das hat den Vorteil, dass die Folien bei einem anschließenden Verwinden bzw. Wickeln des Stapels in beziehungsweise an diesen Kontaktstellen leichter aufeinander abgleiten. Dies hat den Vorteil, dass eine unerwünschte Deformierung der Struktur beziehungsweise der glatten Folien und/oder der gewellten Folien vermieden werden kann.

In diesem Zusammenhang ist es auch bevorzugt, angrenzend zu den Kontaktstellen Zwickel zu bilden, in denen zumindest teilweise eine Haftschicht vorgesehen wird. Wird Zwickel ist der Bereich nahe der Kontaktstellen gemeint, der durch die benachbarte glatte und die gewellte Folie generiert wird. Der Zwickel umfasst insbesondere eine spitz zulaufende Querschnittsform einer Ecke eines Kanals etc.. Üblicherweise soll in einem Bereich dieses Zwickels schließlich eine fugetechnische Verbindung als Lötverbindung ausgeführt sein. Hierzu ist es erforderlich, dass dort eine Haftschicht vorgesehen ist, die sicherstellt, dass das daran haftend Lotmaterial bei der thermischen Behandlung nach dem Aufschmelzen genau in diesem Zwickel ansammelt. Dies wird durch einen zumindest teilweise in den Zwickel hineinragenden Haftschicht-Streifen unter anderem gewährleistet.

Es ist weiter bevorzugt, dass der mindestens eine Teilabschnitt mit dem Gleitmittel auf mindestens einer glatten Folie und die Haftschicht auf mindestens einer gewellten Folie erzeugt wird. Das bedeutet beispielsweise, dass relativ große Flächen der glatten Folie mit dem Gleitmittel benetzt sein können, ohne dass schließlich die fügetechnischen Verbindungen davon beeinflusst werden, da die gegenüberliegende Haftschicht ausreichend Halt für das vorübergehende Fixieren des Lotmaterials gewährleistet. Gleichzeitig ist aber auch sichergestellt, dass selbst bei einem Versatz der Folien zueinander ausreichend Gleitmittel vorgesehen ist.

Gemäß einer weiteren Ausgestaltung des Verfahrens wird ein Stapel gebildet, wobei zwei außen angeordnete Folien mit Gleitmittel und dazwischen Folien ohne Gleitmittel vorgesehen sind. Gerade beim gemeinsamen Verformen beziehungsweise Winden und/oder Wickeln eines Stapels mit mehreren Folien treten die größten Relativbewegungen regelmäßig in der Grenzschicht auf. Außerdem werden diese Stapel häufig auch durch glatte Folien begrenzt, so dass bei der Herstellung der Struktur aus mehreren Stapeln unter Umständen mehrere, benachbart zueinander angeordnete, glatte Folien direkt aneinander liegen. Um hier die Reibung zu minimieren ist es besonders vorteilhaft, diese Grenzlagen mit ausreichend Gleitmittel auszustatten.

Das erfindungsgemäße Verfahren, damit hergestellte Lagen beziehungsweise Strukturen sowie das technische Umfeld werden mit Bezug auf die Figuren näher erläutert. Die Figuren zeigen besonders bevorzugte Ausgestaltungen des Verfahrens beziehungsweise der damit hergestellten Struktur, auf die sich die Erfindung jedoch nicht begrenzen lässt. Es zeigen:
- Fig. 1: Schematisch den Ablauf eines Verfahrens zur Herstellung einer hochtemperaturfesten Struktur;
- Fig. 2: schematisch eine Lage nach der Bearbeitung mit einer Vorrichtung zum Applizieren von Haftmitteln und Gleitmitteln; und
- Fig. 3: schematisch ein Detail einer für den Lotprozess vorbereiteten gewellten Folie.

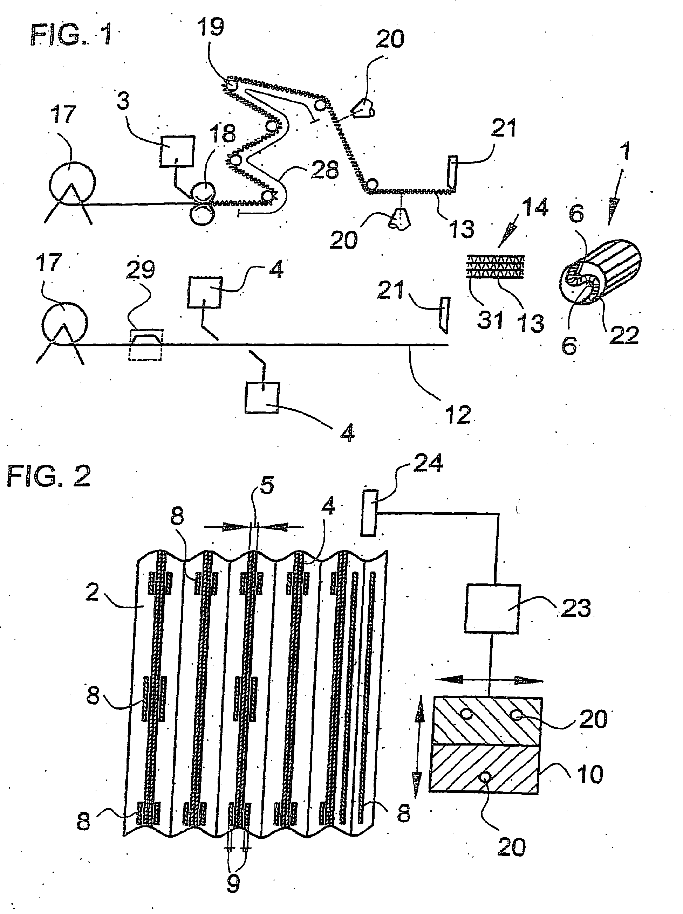

Figur 1 zeigt schematisch die Herstellung einer hochtemperaturfesten Struktur 1, die eine Vielzahl für ein Abgas durchströmbare Kanäle 22 aufweist. Dabei sind metallische Lagen 2 um Wickelpunkte 6 S-förmig gewunden, so dass die Struktur 1 schließlich eine im wesentlichen zylindrische äußere Gestalt hat Solche, auch als Wabenkörper bezeichnete, Strukturen werden insbesondere zur Behandlung von Automobil-Abgasen eingesetzt.

Zur Herstellung werden glatte und gewellte Lagen 2 zu einem Stapel 14 abwechselnd angeordnet, die beispielsweise durch außen angeordnete Decklagen 31 begrenzt sind.

Zur Herstellung einer Lage 2, insbesondere einer gewellten Folie 13, wird die glatte Lage beispielsweise von einer Spule 17 kontinuierlich abgezogen. Die Lage wird nun hin zu zwei miteinander kämmenden Profilwalzen 18 geführt, wobei vor dem stattfindenden Umformschritt schnell verflüchtigendes Öl 3 hinzugegeben wird. Indem die Lage 2 durch die kämmenden Profilwalzen 18 hindurchgeführt wird, entsteht eine Wellung. Das auf den Seiten beziehungsweise der Oberfläche befindliche Öl 3 verflüchtigt sich über die Strecke 28, in der die gewellte Folie 13 um eine Mehrzahl von Rollen 19 herumgeführt wird. Bis der bearbeitete Abschnitt einer gewellten Folie 13 die erste Düse 20 zum Auftragen von Haftmittel 7 erreicht, ist das aufgetragene Öl 3 bereits nicht mehr vorhanden. Aufgrund der Tatsache, dass das Öl 3 nun entfernt ist, wird das Haften der Haftschicht 8 beziehungsweise des Haftmittels 7 (hier nicht dargestellt) nicht beeinträchtigt. Bei dem hier gezeigten kontinuierlichen Prozess wird zunächst mittels einer ersten Düse 20 Haftmittel 7 von der einen Seite der gewellten Folie 13 und anschließend Haftmittel 7 von der anderen Seite mittels einer weiteren Düse 20 aufgetragen. In einer Vielzahl von Fällen ist es jedoch ausreichend, dass die gewellte Folie 13 nur von einer Seite her mit Haftmittel 7 versehen wird. Schließlich wird die gewellte Folie 13 mit einer vorgegebenen Länge mittels einer Schneidvorrichtung 21 vom Band abgetrennt.

In der unteren Bildhälfte ist parallel die Bereitstellung von glatten metallischen Lagen schematisch dargestellt. Wiederum wird eine Lage 2 von einer Spule 17 abgezogen, wobei das darauf befindliche Öl 3 mittels eines Ofens 29 thermisch entfernt wird. Anschließend wird gezielt auf der Oberseite und nachfolgend auch auf der Unterseite ein Gleitmittel 4 aufgetragen. Wiederum wird das glatte Metallband abschließend mit einer Schneidvorrichtung 21 in glatte Folien 12 einer vorgegebenen Länge abgetrennt.

Die so hergestellte glatte Folie 12 und gewellte Folie 13 werden nun zu einem Stapel 14 gestapelt, anschließend gewunden und schließlich miteinander verlötet. Dabei kann das Beloten in der bekannten Art und Weise stattfinden, indem die Struktur 1 zumindest teilweise in ein Gehäuse eingeführt wird, und die gesamte Vorrichtung beispielsweise über die Stirnseite und durch die gebildeten Kanäle hindurch mit Lotpulver in Kontakt gebracht wird. Anschließend wird das überschüssige Lotmaterial entfernt und die Vorrichtung in einen Ofen geführt wo der tatsächliche Lötvorgang stattfindet.

Figur 2 zeigt in einer Draufsicht schematisch eine mit mehreren Haftschichten 8. und mehreren Teilabschnitten 5 mit Gleitmitteln 4 ausgestaltete metallische Lage 2. Die Teilabschnitte 5 sind so angeordnet dass sie die Extrema 26 der gewellten Lage 2 überdecken, und zwar genau dort, wo ein Kontakt mit einer benachbarten glatten metallischen Lage stattfindet. Benachbart dazu sind die Haftschichten 8 in dem gewünschten Verbindungsbereich 9 vorgesehen. Wie aus der Figur 2 zu entnehmen ist, sind beliebige Muster bezüglich der Anordnung von Haftschichten 8 und Gleitmittelschichten möglich. Dabei erstrecken sich die Teilabschnitte 5 mit dem Gleitmittel 4 bevorzugt über die gesamte Kontaktstelle 15 beziehungsweise die gesamte Länge der Lage 2, während die Haftschicht 8 bevorzugt nur in einem lokal begrenzten Teilbereich in Richtung der Extrema 26 beziehungsweise quer dazu erstreckt.

Das Auftragen von Gleitmittel 4 und Haftmittel 7 erfolgt in der dargestellten Ausführungsvariante mit einer gemeinsamen Vorrichtung 10. Bevorzugt wird dabei auf das sogenannte Drop-on-Demand-Verfahren zurückgegriffen. Die Vorrichtung 10 weist dazu eine Mehrzahl von Düsen 20 auf, die entweder Haftmittel 7 oder Gleitmittel 4 emittieren. Die Vorrichtung 10 ist relativ zur metallischen Lage 2 bewegbar angeordnet, beziehungsweise die Lage 2 ist gegenüber der Vorrichtung bewegbar. Entsprechend dem gewünschten Muster auf der Lage 2 wird dann, wenn die jeweilige Düse 20 über der Lage 2 angeordnet ist, entweder eine Haftmittelschicht 8 und/oder eine Gleitmittelschicht generiert Hierzu weist die Vorrichtung 10 einen Antrieb 23 auf, der mit beispielsweise einer Speichereinheit und/oder einer frei programmierbaren Steuerung verbunden ist. Es ist auch möglich, dass der Antrieb mit einem Detektor 24 in Verbindung steht, so dass eine Regelung der Gleitmittelzufuhr beziehungsweise der Haftmittelzufuhr zur metallischen Lage 2 möglich ist. Damit ist beispielsweise gewährleistet, dass bei einer Deformierung der Lage 2 beziehungsweise bei der Behandlung unterschiedlicher Welltypen immer noch eine sehr exakte Positionierung des Gleitmittels 4 beziehungsweise des Haftmittels 7 stattfindet.

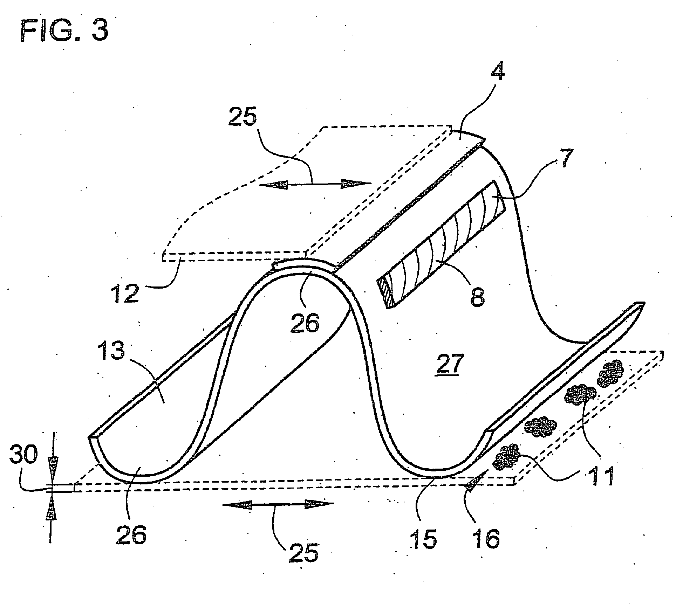

In Figur 3 ist schematisch und in einer perspektivischen Darstellung ein Detail einer gewellten Folie 13 dargestellt, die (gestrichelt angedeutet) schließlich von zwei glatten Folien 12 abgedeckt wird. Die abwechselnd gestapelten glatten Folien 12 und gewellten Folien 13 bilden Zwickel 16, in denen schließlich die Lötverbindungen generiert wird sollen. Rechts ist in Figur 3 das Lotmaterial 11 schematisch dargestellt, welches dort insbesondere infolge die Bereitstellung von Haftschichten 8 bis zur thermischen Behandlung der Struktur 1 fixiert wird.

Die gewellte Folie 13 weist eine sinus-ähnliche Wellung auf, die durch im wesentlichen parallel zueinander verlaufenden Extrema 26 gekennzeichnet ist. Die Extrema 26 stellen beim anschließenden Stapeln die Kontaktstellen 15 hin zu den benachbarten glatten Folien 12 dar. Durch das beschriebene Verfahren lässt sich beispielsweise im Bereich der Extrema 26 beziehungsweise im Bereich der Kontaktstelle 15 in einem Teilabschnitt 5 Gleitmittel 4 bereitstellen. Dieses Gleitmittel 4 begünstigt eine Relativbewegung 25 der glatten Folie 12 gegenüber der gewellten Folie 13. Dadurch wird beispielsweise eine mechanische Zerstörung der Oberfläche verhindert, sowie das Wickeln prozesssicher für eine Serienfertigung ausgelegt. Um sicherzustellen, dass anschließend eine dauerhafte fügetechnische Verbindung ausgebildet wird, wird, bevorzugt in Abhängigkeit von den eingesetzten Dicken 30 der Lagen nahe der Zwickel 16 beziehungsweise nahe der Extrema 26 eine Haftschicht 8 vorgesehen. Die Haftschicht 8 mit dem Haftmittel 7 ist dabei benachbart zu dem Gleitmittel 4 positioniert Gleichzeitig wird auch verhindert, dass sich Lotmaterial 11 im Bereich der Flanken 27 anordnet, in dem später ein gleichzeitiger Kontakt des Lotmaterials 11 mit einer benachbarten Folie nicht möglich ist.

Die präzise hergestellte Gleitmittelschicht und die davon abgegrenzte, präzise hergestellte Haftschicht 8 erlauben während des Wickelvorgangs ein Aufeinandergleiten der benachbart zueinander angeordneten Lagen 2, wobei gleichzeitig eine ausreichende, vorübergehende Fixierung des Lotmaterials 11 im Inneren der Struktur 1 gewährleistet wird. Damit lassen sich besonders hochbelastbare Strukturen 1 herstellen, wie sie beispielsweise als Trägerkörper für die unterschiedlichsten Beschichtungen in Abgassystemen mobiler Verbrennungskraftmaschinen eingesetzt werden.

### Bezugszeichenliste

- 1: Struktur
- 2: Lage
- 3: Öl
- 4: Gleitmittel
- 5: Teilabschnitt
- 6: Verbindung
- 7: Haftmittel
- 8: Haftschicht
- 9: Verbindungsbereich
- 10: Vorrichtung
- 11: Lotmaterial
- 12: glatte Folie
- 13: gewellte Folie
- 14: Stapel
- 15: Kontaktstelle
- 16: Zwickel
- 17: Spule
- 18: Profilwalze
- 19: Rolle
- 20: Düse
- 21: Schneidvorrichtung
- 22: Kanal
- 23: Antrieb
- 24: Detektor
- 25: Relativbewegung
- 26: Extremum
- 27: Flanke
- 28: Strecke
- 29: Ofen
- 30: Dicke
- 31: Decklage

## Patentansprüche

1. Verfahren zur Herstellung einer hochtemperaturfesten Struktur (1) umfassend mindestens eine wenigstens teilweise strukturierte metallische Lage (2) mit zumindest den folgenden Schritten:
(a) Umformen einer glatten metallischen Lage (2) infolge eines Walzverfahrens, wobei Öl (3) zumindest teilweise die mindestens eine Lage (2) benetzt;
(b) Zumindest teilweises Entfernen des Öls (3);
(c) Zuführen von Gleitmittel (4) auf mindestens einen Teilabschnitt (5) der mindestens einen Lage (2);
(d) Zumindest teilweises Formen der Struktur (1);
(e) Erzeugen von fiigetechnischen Verbindungen zur Fixierung der Struktur (1).

2. Verfahren nach Anspruch 1, bei dem nach Schritt (b) der mindestens einen Lage (2) ein Haftmittel (7) zur Erzeugung mindestens einer Haftschicht (8) zugeführt wird.

3. Verfahren nach Anspruch 2, bei dem die mindestens eine Haftschicht (8) in einem Verbindungsbereich (9) vorgesehen ist, der benachbart zu dem mindestens einen Teilabschnitt (5) ausgebildet ist.

4. Verfahren nach einem der vorstehenden Ansprüche, bei dem das Gleitmittel (4) mit einem Drop-on-Demand-Verfahren oder einem Bubble-Jet-Verfahren appliziert wird.

5. Verfahren nach einem der Ansprüche 2 bis 4, bei dem das Gleitmittel (4) und zusätzlich auch Haftmittel (7) mit einer gemeinsamen Vorrichtung (10) appliziert wird.

6. Verfahren nach einem der vorstehenden Ansprüche, bei dem der mindestens einen Lage (2) vor Schritt (a) schnellverflüchtigendes Öl (3) appliziert wird, welches nach der Umformung und bis zur Durchführung des Schrittes (c) bzw. des Applizierens des Haftmittels (7) im wesentlichen verflüchtigt ist.

7. Verfahren nach einem der vorstehenden Ansprüche, bei dem Schritt (b) wenigstens eines der Verfahren thermisches oder mechanisches Entfetten umfasst.

8. Verfahren nach einem der vorstehenden Ansprüche, bei dem die mindestens eine Lage (2) zumindest vor oder nach Schritt (d) mit einem Lotmaterial (11) in Kontakt gebracht wird.

9. Verfahren nach einem der vorstehenden Ansprüche, bei dem Schritt (e) eine thermische Behandlung der Struktur (1) umfasst.

10. Verfahren nach einem der vorstehenden Ansprüche, bei dem die Struktur (1) aus einer Mehrzahl glatter Folien (12) und gewellter Folien (13) hergestellt wird, wobei Schritt (d) das abwechselnde Stapeln dieser Folien (12, 13) umfasst, wobei Kontaktstellen (15) gebildet werden, welche zumindest teilweise von mindestens einem Teilabschnitt (5) mit dem Gleitmittel (4) überlagert sind, und die Folien (12, 13) dann zumindest teilweise zueinander bewegt werden.

11. Verfahren nach Anspruch 10, bei dem angrenzend zu den Kontaktstellen (15) Zwickel (16) gebildet werden, in denen zumindest teilweise eine Haftschicht (7) vorgesehen wird.

12. Verfahren nach Anspruch 10 oder 11, bei dem der mindestens eine Teilabschnitt (5) mit dem Gleitmittel (4) auf mindestens einer glatten Folie (12) und die Haftschicht (8) auf mindestens einer gewellten Folie (13) erzeugt wird.

13. Verfahren nach einem der vorstehenden Ansprüche 10 bis 12, bei dem ein Stapel (14) gebildet wird, wobei zwei außen angeordnete Folien (12, 13) mit Gleitmittel (4) und dazwischen Folien (12, 13) ohne Gleitmittel (4) vorgesehen sind.

## Claims

1. A process for producing a structure (1) which is able to withstand high temperatures and comprises at least one at least partially structured metallic sheet (2) and at least the following steps:
(a) deforming a smooth metallic sheet (2) by means of a rolling process, in which oil (3) at least partially wets the at least one sheet (2);
(b) at least partially removing the oil (3);
(c) feeding lubricant (4) onto at least one subsection (5) of the at least one sheet (2);
(d) at least partially shaping the structure (1);
(e) producing joins in order to fix the structure (1).

2. The process as claimed in claim 1, in which after step (b) a bonding agent (7) is fed to the at least one sheet (2) in order to produce at least one bonding layer (8).

3. The process as claimed in claim 2, in which the at least one bonding layer (8) is provided in a joining region (9) which is formed adjacent to the at least one subsection (5).

4. The process as claimed in one of the preceding claims, in which the lubricant (4) is applied using a drop-on-demand process or a bubble jet process.

5. The process as claimed in one of claims 2 to 4, in which the lubricant (4) and additionally also the bonding agent (7) are applied using a common apparatus (10).

6. The process as claimed in one of the preceding claims, in which oil (3) which is quickly volatilized is applied to the at least one sheet (2) prior to step (a), and the oil is substantially volatilized after the deforming operation until step (c) is carried out or the bonding agent (7) is applied.

7. The process as claimed in one of the preceding claims, in which step (b) comprises at least one of the processes of thermal or mechanical degreasing.

8. The process as claimed in one of the preceding claims, in which the at least one sheet (2) is brought into contact with a solder material (11) at least before or after step (d).

9. The process as claimed in one of the preceding claims, in which step (e) comprises a heat treatment of the structure (1).

10. The process as claimed in one of the preceding claims, in which the structure (1) is produced from a plurality of smooth foils (12) and corrugated foils (13), whereby step (d) comprises the alternate stacking of these foils (12, 13), forming contact locations (15), which at least in part are superimposed by at least one subsection (5) comprising the lubricant (4) , the foils (12, 13) then at least partially being moved toward one another.

11. The process as claimed in claim 10, in which pockets (16) are formed adjacent to the contact locations (15) in which at least in part a bonding layer (7) is provided.

12. The process as claimed in claim 10 or 11, in which the at least one subsection (5) comprising the lubricant (4) is produced on at least one smooth foil (12), and the bonding layer (8) is produced on at least one corrugated foil (13).

13. The process as claimed in one of the preceding claims 10 to 12, in which a stack (14) is formed, by providing two externally arranged foils (12, 13) with lubricant (4) and foils (12, 13) between them without lubricant (4).

## Revendications

1. Procédé destiné à la fabrication d'une structure (1) résistante aux températures élevées, comprenant au moins une couche métallique (2) au moins partiellement structurée avec au moins les étapes suivantes :
(a) transformation d'une couche métallique lisse (2) à la suite d'un procédé de laminage, de l'huile (3) mouillant au moins partiellement l'au moins une couche (2) ;
(b) évacuation au moins partielle de l'huile (3) ;
(c) alimentation en lubrifiant (4) sur au moins une section partielle (5) de l'au moins une couche (2) ;
(d) formation au moins partielle de la structure (1);
(e) génération des liaisons reliées par technique de jointoiement pour fixer la structure (1).

2. Procédé selon la revendication 1, dans lequel après l'étape (b) l'au moins une couche (2) est alimentée d'un agent adhésif (7) pour générer au moins une couche adhésive (8).

3. Procédé selon la revendication 2, dans lequel l'au moins une couche adhésive (8) est prévue dans une région de liaison (9), qui est réalisée de manière adjacente de l'au moins une section partielle (5).

4. Procédé selon l'une des revendications précédentes, dans lequel le lubrifiant (4) est appliqué par un procédé de goutte à la demande ou par un procédé à jet.

5. Procédé selon l'une des revendications 2 à 4, dans lequel le lubrifiant (4) et en outre aussi de l'agent adhésif (7) sont appliqués avec un dispositif (10) commun.

6. Procédé selon l'une des revendications précédentes, dans lequel on applique sur l'au moins une couche (2) avant l'étape (a) de l'huile (3) à volatilisation rapide qui après la transformation et jusqu'à l'exécution de l'étape (c), respectivement l'application de l'adhésif (7), est sensiblement volatilisé.

7. Procédé selon l'une des revendications précédentes, dans lequel l'étape (b) comprend au moins un des procédés dégraissage thermique ou dégraissage mécanique.

8. Procédé selon l'une des revendications précédentes, dans lequel l'au moins une couche (2) est mise en contact avec un métal d'apport de brasage (11) au moins avant ou après l'étape (d).

9. Procédé selon l'une des revendications précédentes, dans lequel l'étape (e) comprend un traitement thermique de la structure (1).

10. Procédé selon l'une des revendications précédentes, dans lequel la structure (1) est fabriquée d'une pluralité de feuilles lisses (12) et de feuilles ondulées (13), l'étape (d) comprenant l'empilement alterné de ces feuilles (12, 13), des positions de contact (15) étant formées qui sont superposées au moins partiellement par au moins une section partielle (5) avec le lubrifiant (4) et les feuilles (12, 13) étant alors déplacées au moins partiellement les unes par rapport aux autres.

11. Procédé selon la revendication 10, dans lequel des coins (16) sont formés de manière adjacente par rapport aux positions de contact (15), coins (16), dans lesquels une couche d'adhésif (7) est prévue au moins partiellement.

12. Procédé selon la revendication 10 ou 11, dans lequel l'au moins une section partielle (5) est générée avec le lubrifiant (4) sur au moins une feuille lisse (12) et la couche adhésive (8) sur au moins une feuille ondulée (13).

13. Procédé selon l'une des revendications précédentes 10 à 12, dans lequel une pile (14) est formée, dans quel cas deux feuilles (12, 13) agencées à l'extérieur sont prévues avec du lubrifiant (4) et entre celles-ci des feuilles (12, 13) sans lubrifiant (4).
